(19) Europäisches Patentamt
European Patent Office
Office européen des brevets

(11) Veröffentlichungsnummer: **0 301 342 B1**

(12) **EUROPÄISCHE PATENTSCHRIFT**

(45) Veröffentlichungstag der Patentschrift: **01.07.92**

(51) Int. Cl.5: **C08G 18/08**, C08G 18/30, B29C 39/32, C08G 18/10, C08G 18/65

(21) Anmeldenummer: **88111498.7**

(22) Anmeldetag: **18.07.88**

(54) **Verfahren zur Herstellung von elastomeren Formkörpern auf Basis von Harnstoffgruppen aufweisenden Polyisocyanat-Polyadditionsprodukten.**

(30) Priorität: **30.07.87 DE 3725198**

(43) Veröffentlichungstag der Anmeldung:
**01.02.89 Patentblatt 89/05**

(45) Bekanntmachung des Hinweises auf die Patenterteilung:
**01.07.92 Patentblatt 92/27**

(84) Benannte Vertragsstaaten:
**AT BE CH DE ES FR GB IT LI NL SE**

(56) Entgegenhaltungen:
**EP-A- 0 154 275**
**GB-A- 2 137 642**
**US-A- 4 604 445**
**US-A- 4 699 968**

(73) Patentinhaber: **BAYER AG**

**W-5090 Leverkusen 1 Bayerwerk(DE)**

(72) Erfinder: **Ganster, Otto, Dr.**
**Droste-Huelshoff-Strasse 5**
**W-5068 Odenthal(DE)**
Erfinder: **Luckas, Bruno**
**Petersbergstrasse 4**
**W-5090 Leverkusen(DE)**
Erfinder: **Knipp, Ulrich, Dr.**
**Haberlandstrasse 3**
**W-5060 Bergisch-Gladbach 2(DE)**
Erfinder: **Ruprecht, Hans-Dieter, Dr.**
**Pfarrer-Maybaum-Weg 27**
**W-5000 Koeln 80(DE)**
Erfinder: **Eiben, Robert, Dr.**
**Jakob-Boehme-Strasse 8**
**W-5000 Koeln 80(DE)**

**EP 0 301 342 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein neues Verfahren zur Herstellung von elastomeren Formkörpern auf Basis von Harnstoffgruppen aufweisenden Polyisocyanat-Polyadditionsprodukten, insbesondere auf Basis von Harnstoffgruppen aufweisenden Polyurethanen einer über 1,0 g/cm$^3$ liegenden Rohdichte, bei welchem die zur Erzielung hochwertiger mechanischer Eigenschaften erforderlichen Harnstoffgruppen überwiegend durch Umsetzung von organischen Polyisocyanaten und Wasser erhalten werden.

Die Herstellung von massiven, Harnstoffgruppen aufweisenden Polyurethan-Elastomeren unter Verwendung von Wasser als Kettenverlängerungsmittel nach dem Zweistufen-Verfahren ist seit langer Zeit bekannt (vgl. z.B. Kunststoff-Handbuch, Carl Hanser Verlag, 1966, Bd. VII, Seiten 270-271). Wegen des bei der Reaktion der Isocyanatgruppen mit dem Wasser entstehenden $CO_2$-Gases führt hier jedoch der Weg zu massiven Produkten über die Zwischenstufe der entsprechenden Schaumstoffe, die zunächst auf Walzen verdichtet werden müssen und dann erst zu massiven Elastomeren verpreßt werden können.

Die durch diese vielen Einzelschritte sehr aufwendige Fertigung erlaubt den Einsatz des Verfahrens nur für sehr anspruchsvolle Anwendungen. Ein großer Nachteil des Preßverfahrens ist außerdem, daß nur Plattenware oder geometrisch sehr einfach geformte Teile hergestellt werden können.

Andererseits weisen Harnstoffgruppen aufweisende Polyisocyanat-Polyadditionsprodukte, insbesondere Harnstoffgruppen aufweisende Polyurethane besonders hochwertige mechanische Eigenschaften auf, wobei die Verwendung von Wasser als Kettenverlängerungsmittel (anstelle von Diaminen) eine besonders einfache und preisgünstige Methode der Einführung von Harnstoffgruppen darstellt.

Es war demzufolge die der Erfindung zugrundeliegende Aufgabe, ein neues Verfahren zur Herstellung von elastomeren Harnstoffgruppen aufweisenden Polyisocyanat-Polyadditionsprodukten, insbesondere Polyurethanen zur Verfügung zu stellen, welches einerseits von dem Prinzip der Verwendung von Wasser als Kettenverlängerungsmittel Gebrauch macht, und welches andererseits nicht mit den genannten Nachteilen behaftet ist.

Diese Aufgabe konnte durch die Bereitstellung des nachstehend näher beschriebenen erfindungsgemäßen Verfahrens gelöst werden, bei welchem unter Verwendung von Wasser als Kettenverlängerungsmittel die Herstellung von Elastomerformteilen im Gießverfahren erfolgt. Die zunächst offenen Formen werden zumindest zu 95 % gefüllt, dann dicht verschlossen, so daß die Reaktion unter einem solchen Druck stattfindet, daß das entstehende Kohlendioxidgas nicht zum Aufschäumen des Reaktionsgemischs führen kann. Nach Ablauf der für die Aushärtung nötigen Zeitspanne ist es dabei überraschenderweise möglich, auch sehr weiche Formteile dem Werkzeug zu entnehmen, ohne daß es unter der Wirkung des gelösten Kohlendioxidgases zu einer Verformung der Formteile kommt.

Aus der DE-OS 3 407 931 ist zwar bereits ein Verfahren zur Herstellung von massiven oder mikrozellularen Formkörpern auf Basis von Harnstoffgruppen aufweisenden Polyurethanen bekannt, bei welchem man organische Polyisocyanate, Verbindungen mit gegenüber Isocyanatgruppen reaktionsfähigen Gruppen und Wasser in geschlossenen Formen unter Aufrechterhaltung eines die Schaumbildung verhindernden Drucks zur Reaktion bringt, jedoch erfolgt das Verfahren dieser Vorveröffentlichung nach der Reaktionsspritzgußtechnik, bei welcher die Reaktionspartner unter Hochdruckdurchmischung vereinigt und in eine geschlossene Form eingetragen werden. Die Reaktionsspritzgußtechnik stellt jedoch eine Technik dar, die vor allem auf die Herstellung dünnwandiger Formteile unter Einhaltung kurzer Entformungszeiten ausgerichtet ist. Für die Herstellung dickwandiger Teile hat sich demgegenüber das Gießverfahren unter Verwendung offener Werkzeuge in der Praxis etabliert, da die Herstellung großer und voluminöser Formteile, die frei von eingeschlossenen Luftblasen sind, im Gießverfahren unter Verwendung von langsam reagierenden Reaktionsmassen sehr viel leichter möglich ist. Es konnte aus der Lehre der DE-OS 3 407 931 nicht hergeleitet werden, daß die Herstellung von Gießelastomerformteilen gemäß dem nachstehend näher beschriebenen erfindungsgemäßen Verfahren einen zweckmäßigen und gangbaren Weg zur Herstellung hochwertiger Elastomerer darstellen würde.

Die US-PS 4 416 844 beschreibt ihrerseits ein Verfahren zur Herstellung pannensicherer Reifen, die unter Verwendung von Wasser als Kettenverlängerungsmittel mit einer im wesentlichen blasenfreien, elastischen Reaktionsmasse ausgefüllt werden. Dabei wird die durch das entstehende Kohlendioxidgas hervorgerufene Blasenbildung verhindert, indem die Reaktionsmasse solange in die Reifenkarkasse injiziert wird, bis die Füllmasse gegen die Elastizität der Karkasse einen Druck von mindestens 25 psi (= 1,7 bar) aufbaut. Ein Hinweis auf die Durchführbarkeit des nachstehend näher beschriebenen erfindungsgemäßen Verfahrens zur Herstellung von Gießelastomerformteilen kann dieser Vorveröffentlichung nicht entnommen werden, denn die Reaktionsmasse bleibt im druckstabilen Hohlraum (Karkasse). Die Formteilfertigung betreffende Fragen werden nicht angesprochen.

Gegenstand der Erfindung ist ein Verfahren zur Herstellung von elastomeren Formkörpern auf Basis

von Harnstoffgruppen aufweisenden Polyisocyanat-Polyadditionsprodukten durch Umsetzung von

a) einer Polyisocyanatkomponente mit

b) Verbindungen mit mindestens zwei gegenüber Isocyanatgruppen reaktionsfähigen Gruppen des Molekulargewichtsbereichs 500 bis 12.000,

c) Wasser als Kettenverlängerungsmittel,

und gegebenenfalls

d) organischen Verbindungen mit gegenüber Isocyanatgruppen reaktionsfähigen Wasserstoffatomen des Molekulargewichtsbereichs 60 bis 499,

gegebenenfalls unter Mitverwendung von

e) den aus der Polyurethanchemie an sich bekannten Hilfs- und Zusatzmitteln

nach dem Einstufen- oder Prepolymerverfahren unter Einhaltung einer Isocyanatkennzahl von 70 bis 125, dadurch gekennzeichnet, daß

(i) das Wasser in einer Menge von mindestens 10 Mol-%, bezogen auf die molare Menge an Isocyanatgruppen der Komponente a), verwendet wird und

(ii) daß die aus den Komponenten hergestellte Reaktionsmischung im Gießverfahren in ein offenes Werkzeug gefüllt wird, wobei die eingetragene Menge mindestens 95 % des Formteilvolumens ausmacht, und anschließend das Werkzeug dicht verschlossen wird, so daß durch Reaktion zwischen Wasser und Isocyanat gebildetes Kohlendioxid praktisch nicht zur Expansion des Reaktionsgemisches führen kann.

Unter "Polyisocyanat-Polyadditionsprodukten" sind im Rahmen der Erfindung sowohl reine Polyharnstoffe als auch Harnstoffgruppen aufweisende Polyurethane zu verstehen. Vorzugsweise handelt es sich bei den erfindungsgemäßen Verfahrensprodukten um Harnstoffgruppen aufweisende Polyurethane.

Unter "Einstufen-Verfahren" ist im Rahmen der Erfindung eine Arbeitsweise zu verstehen, gemäß welcher die Komponenten b), c) und d) zu einer "Reaktivkomponente" vereinigt werden, die dann einstufig mit der Polyisocyanatkomponente a) durchmischt und zur Reaktion gebracht wird. Hierbei können die gegebenenfalls mitzuverwendenden Hilfs- und Zusatzmittel sowohl der Polyisocyanatkomponente a) als auch der "Reaktivkomponente" einverleibt werden. Vorzugsweise erfolgt die Zugabe der Hilfs- und Zusatzmittel e) zu der "Reaktivkomponente".

Unter "Prepolymerverfahren" ist im Rahmen der Erfindung eine Arbeitsweise zu verstehen, gemäß welcher die Polyisocyanatkomponente a) mit mindestens einem Teil der Komponente b) und gegebenenfalls mit einem Teil oder der Gesamtmenge der Komponente d) zu einem Isocyanatgruppen aufweisenden "Prepolymer" umgesetzt wird, welches anschließend mit einem Gemisch aus der restlichen Menge der Komponente b) und gegebenenfalls d), sowie der Komponente c) umgesetzt wird. Hierbei können zur Herstellung des Prepolymeren einerseits und des besagten Gemischs andererseits auch unterschiedliche Verbindungen b) und gegebenenfalls d) eingesetzt werden. Auch bei dieser Variante des erfindungsgemäßen Verfahrens können die gegebenenfalls mitzuverwendenden Hilfs- und Zusatzmittel e) sowohl dem Prepolymer als auch dem besagten Gemisch einverleibt werden, wobei die letztgenannte Variante bevorzugt ist.

Unter "Isocyanatkennzahl" ist die Anzahl der in dem, in die Form einzufüllenden, Reaktionsgemisch vorliegenden Isocyanatgruppen pro 100 gegenüber Isocyanatgruppen reaktionsfähigen Gruppen zu verstehen, wobei Wasser als difunktionelle Verbindung in die Berechnung eingeht.

Geeignete Ausgangsmaterialien a) sind beliebige organische Polyisocyanate eines Molekulargewichts von bis zu 600, vorzugsweise bis zu 300. Vorzugsweise werden aromatische Diisocyanate verwendet. Geeignete Polyisocyanate sind beispielsweise 1,5-Diisocyanato-naphthalin, 2,4′- und/oder 4,4′-Diisocyanatodiphenylmethan, 3,3′-Dimethyl-4,4′-diisocyanatodiphenylmethan, 2,4-Diisocyanatotoluol, dessen technische Gemische mit 2,6-Diisocyanatotoluol, 1,4-Diisocyanatobenzol oder Diisocyanate der Formeln

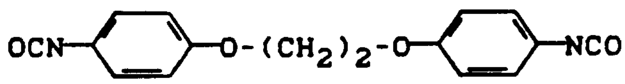
,

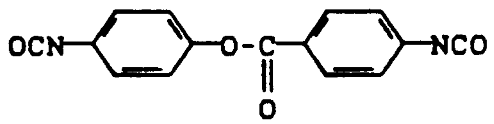
,

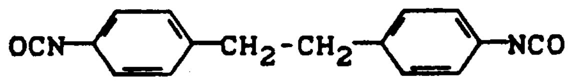
,

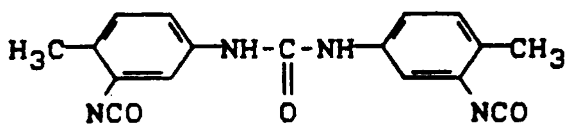
.

Auch (cyclo)aliphatische Diisocyanate wie z.B. Isophorondiisocyanat, 1,6-Diisocyanatohexan, Trans-1,4-cyclohexandiisocyanat, 4,4′-Diisocyanato-dicyclohexylmethan oder p-Xylylendiisocyanat können eingesetzt werden.

Ferner geeignet sind Carbodiimid-(uretonimin-), Isocyanurat-, Harnstoff-, Urethan- und/oder Allophanat-modifizierte Derivate derartiger Diisocyanate, obwohl dies im allgemeinen weniger bevorzugt ist.

Geeignete Ausgangskomponenten b) sind insbesondere Polyester- bzw. Polyetherpolyole des (aus der Funktionalität und dem Gehalt an Hydroxylgruppen errechenbaren) Molekulargewichts von 500 bis 12.000, vorzugsweise 900 bis 6.000, oder beliebige Gemische derartiger Verbindungen.

Die Polyhydroxylverbindungen sind vorzugsweise difunktionell, es kann sich jedoch auch um Gemische handeln, die geringe Anteile an höherfunktionellen Polyhydroxylverbindungen aufweisen, so daß die mittlere Funktionalität der Gemische bei maximal 2,5, vorzugsweise maximal 2,3, liegt.

Geeignete Polyesterpolyole werden beispielsweise durch Umsetzung überschüssiger Mengen mehrwertiger Alkohole mit mehrbasischen, vorzugsweise dibasischen Carbonsäuren bzw. Carbonsäureanhydriden erhalten. Geeignete Carbonsäuren, Carbonsäureanhydride und niedermolekulare, mehrwertige Alkohole sind beispielsweise die in US-PS 4 218 543, Kolonne 8, Zeilen 27 bis 52 genannten Verbindungen.

Für das erfindungsgemäße Verfahren geeignete Polyetherpolyole können beispielsweise in an sich bekannter Weise durch Alkoxylierung geeigneter Startermoleküle, insbesondere unter Verwendung von Ethylenoxid und/oder Propylenoxid gegebenenfalls im Gemisch oder in beliebiger Reihenfolge erhalten werden. Geeignete Startermoleküle sind beispielsweise Wasser, Ethylenglykol, 1,2-Dihydroxypropan, Trimethylolpropan und/oder Glycerin. Ebenfalls geeignet sind Poly(oxytetramethylen)glykole. Auch hier gelten die oben gemachten Ausführungen bezüglich der mittleren Funktionalität der Polyetherpolyole, so daß im Falle der Verwendung von trifunktionellen Startermolekülen wie Trimethylolpropan oder Glycerin die resultierenden trifunktionellen Polyetherpolyole lediglich Abmischkomponenten für difunktionelle Polyetherpolyole darstellen.

Neben oder anstelle der genannten Polyester- und/oder Polyetherpolyole können beim erfindungsgemäßen Verfahren auch andere höhermolekulare Verbindungen des genannten Molekulargewichtsbereichs mit gegenüber Isocyanatgruppen reaktionsfähigen Gruppen als Komponente b) eingesetzt werden. Hierzu gehören beispielsweise Polyester auf Lactonbasis, wie Poly-ε-caprolactone, oder Polyester auf Basis von ω-Hydroxyalkancarbonsäuren wie ω-Hydroxycapronsäure, Polycarbonatpolyole, Polesteramide oder Hydroxylgruppen aufweisende Polyacetale des genannten Molekulargewichtsbereichs.

Ebenfalls gut als Komponente b) geeignete Polyetheramine können aus den obengenannten Polyetherpolyolen nach bekannten Verfahren hergestellt werden. Beispielhaft genannt seien die Cyanoalkylierung von Polyoxyalkylenpolyolen und anschließende Hydrierung des gebildeten Nitrils (US-PS 3 267 050) oder die Aminierung von Polyoxyalkylen-polyolen mit Aminen oder Ammoniak in Gegenwart von Wasserstoff und Katalysatoren (DE-AS 1 215 373).

Ebenfalls als Komponente b) geeignet sind Polyetheramine, die aromatisch gebundene Aminogruppen

tragen, welche mit der Polyetherkette über Urethan- oder Estergruppen verknüpft sind. Die Herstellung derartiger Verbindungen kann beispielsweise nach den Verfahren erfolgen, die in EP-A-79 536, DE-OS 2 948 419, DE-OS 2 019 432, DE-OS 2 619 840, US-PS 3 808 250, US-PS 3 975 426 oder US-PS 4 016 143 beschrieben sind.

Bei der Komponente c) handelt es sich um Wasser, welches als solches oder auch in Form wasserabspaltender anorganischer oder organischer Verbindungen wie beispielsweise $Na_2SO_4 x 12 H_2O$, Pinakonhydrat, wasserbeladene Molekularsieb-Zeolithe oder Acetaldoxim eingebracht werden kann. Vorzugsweise wird das Wasser als solches in flüssiger Form verwendet.

Die gegebenenfalls mitzuverwendenden organischen Verbindungen d) weisen ein Molekulargewicht von 60 bis 499, vorzugsweise von 62 bis 350, auf. Vorzugsweise handelt es sich um Verbindungen, die zwei oder drei gegenüber Isocyanatgruppen reaktionsfähige Gruppen tragen. In Betracht kommen insbesondere die entsprechenden mehrwertigen aliphatischen Alkohole wie z.B. Ethylenglykol, 1,2-Dihydroxypropan, 1,3-Dihydroxypropan, 1,4-Dihydroxybutan, 1,6-Dihydroxyhexan, Trimethylolpropan, Glycerin, die niedermolekularen Alkoxylierungsprodukte der genannten mehrwertigen Alkohole wie beispielsweise Diethylenglykol, Triethylenglykol, Dipropylenglykol, Tripropylenglykol, sowie beliebige Gemische derartiger niedermolekularer Kettenverlängerungsmittel bzw. Vernetzer. Es ist ebenfalls möglich, als Komponente d) Aminoalkohole bzw. Alkoxylierungsprodukte von aliphatischen Aminen oder von Hydrazin zu verwenden, wie z.B. Ethanolamin, Diethanolamin, Triethanolamin, Propanolamine, Hydrazinoethanol. Schließlich ist es möglich, als Aufbaukomponente d) organische Diamine mit mindestens zwei primären und/oder sekundären Aminogruppen des Molekulargewichtsbereichs 60 bis 499 mitzuverwenden, wie z.B. 1,2-Diaminoethan, 1,6-Diaminohexan, 2,4-Diaminotoluol, 4,4′-Diaminodiphenylmethan und insbesondere aromatische Diamine mit sterisch gehinderten Aminogruppen, wie sie beispielhaft in DE-OS 2 916 485, Seite 17, Zeile 26 bis Seite 18, Zeile 9 erwähnt werden.

Da es jedoch die der Erfindung zugrundeliegende Aufgabe war, auf die Mitverwendung von Kettenverlängerungsmitteln und Vernetzern der Art der beispielhaft genannten Verbindungen d) weitgehend verzichten zu können, werden die Verbindungen d) allenfalls in geringen Mengen von maximal 25 Mol-%, bezogen auf das eingesetzte Wasser, zur gegebenenfalls erwünschten Begünstigung einer "gummiartigen" Verfestigung mitverwendet. Im Falle der Verwendung von Aminogruppen aufweisenden Komponenten d) kann durch deren Mitverwendung wegen der sofort einsetzenden Reaktion zwischen Isocyanatgruppen und Aminogruppen eine gegebenenfalls erwünschte Erhöhung der Viskosität des flüssigen Reaktionsgemischs vor Einsetzen der Hauptreaktion erreicht werden. Dies ist aus werkzeugtechnischen Gründen (Abdichtung der Trennebene, der Auswerfer und der Kernzüge) oftmals vorteilhaft.

Bei den gegebenenfalls mitzuverwendenden Hilfs- und Zusatzmitteln e) handelt es sich beispielsweise um die üblichen Emulgatoren, Katalysatoren, Gleitmittel, innere Formtrennmittel, Stabilisatoren, pulverförmige oder fasrige verstärkende Füllstoffe, Flammschutzmittel oder Weichmacher der beispielsweise in DE-OS 3 147 736 oder im bereits zitierten Kunststoff-Handbuch auf Seite 96 ff. genannten Art.

Der erste erfindungswesentliche Punkt besteht in der Verwendung von Wasser als hauptsächlichen Kettenverlängerer. Das Wasser wird bei der Durchführung des erfindungsgemäßen Verfahrens in einer Menge von mindestens 0,10 Mol, vorzugsweise 0,15 bis 0,45 Mol pro Mol der in der Komponente a) vorliegenden Isocyanatgruppen mitverwendet, wobei auch bei Verwendung von NCO-Prepolymeren die Isocyanatgruppen der zur Herstellung der Prepolymeren eingesetzten monomeren Polyisocyanate a) in die Berechnung eingehen. Im übrigen werden die Reaktionspartner unter Einhaltung einer Isocyanatkennzahl von 70 bis 125, vorzugsweise 85 bis 115, verarbeitet.

Die Durchführung des erfindungsgemäßen Verfahrens erfolgt durch Umsetzung der genannten Reaktionspartner im Gießverfahren, wobei beim Einstufenverfahren vorzugsweise die Komponenten b) bis e) zu einer "Reaktiv"-bzw. "Polyolkomponente" vereinigt werden, die mit der Polyisocyanatkomponente a) maschinell oder gegebenenfalls auch manuell miteinander vermischt wird. Hierbei kann man sich beispielsweise der im Kunststoff-Handbuch, Carl Hanser Verlag, 1966, Bd. VII, Seiten 144-166 beschriebenen Aggregate bedienen.

Die Herstellung des Reaktionsgemischs kann jedoch auch, wie oben bereits ausgeführt, nach dem NCO-Prepolymer-Verfahren erfolgen. In einem solchen Fall würden die "NCO-Prepolymeren" aus der Polyisocyanatkomponente a) und der gesamten Menge der Komponente b) bzw., vorzugsweise, einem Teil der Komponente b), der besonders bevorzugt nicht mehr als 80 % der Gesamtmenge der Komponente b) ausmacht, sowie gegebenenfalls einem Teil oder der Gesamtmenge der Komponente d) die "Polyisocyanatkomponente" und die Mischung der verbleibenden Anteile der Komponenten b) bis e) die "Polyolkomponente" darstellen. Die Durchmischung erfolgt dann wie im Einstufenverfahren. Selbstverständlich können zur Herstellung der NCO-Prepolymeren auch Verbindungen b) und gegebenenfalls d) eingesetzt werden, die bezüglich ihrer Zusammensetzung und ihres Molekulargewichts den obigen Ausführungen

entsprechen, jedoch von den Verbindungen b) und d) der "Reaktivkomponente" verschieden sind.

Die Menge der Polyisocyanatkomponente beträgt im allgemeinen 10 bis 95 Gew.-%, vorzugsweise 40 bis 80 Gew.-%, bezogen auf die Gesamtmenge des Reaktionsgemischs. Gewichtsmäßig hohe Isocyanatanteile können dann vorliegen, wenn als Polyisocyanatkomponente NCO-Semiprepolymere eingesetzt werden.

Die miteinander zu durchmischenden Reaktionspartner weisen vor der Durchmischung im allgemeinen eine Temperatur von 30 bis 150° C, vorzugsweise 50 bis 120° C auf. Insbesondere bei Verwendung von NCO-Prepolymeren kann es zweckmäßig sein, diese auf eine höhere Temperatur innerhalb dieser Bereiche zu erwärmen.

Der zweite erfindungswesentliche Punkt besteht darin, das vorzugsweise durch Niederdruckdosierung und Rührwerkvermischung erzeugte Reaktionsgemisch im Gießverfahren gegendruckfrei in ein zunächst offenes, auf eine Temperatur im Bereich von 30 bis 140° C, vorzugsweise 60 bis 120° C, temperiertes Werkzeug zu füllen, welches vorzugsweise aus Metall, insbesondere Stahl, besteht. Dieses Werkzeug wird mit dem flüssigen Reaktionsgemisch zumindest zu 95 %, vorzugsweise vollständig ausgegossen und dann dicht verschlossen, so daß das im Laufe der Reaktion gebildete Kohlendioxid nicht zu einer Expansion der Reaktionsmischung führen kann und dadurch ganz oder überwiegend in Lösung geht. Vorzugsweise müssen die Formwerkzeuge gefüllt und verschlossen sein, bevor eine nennenswerte chemische Umsetzung stattfindet. Oftmals erweist es sich als zweckmäßig, die Innenwände der Formwerkzeuge vor Befüllen mit einem der üblichen Formtrennmittel zu beschichten.

Bei Verwendung von druckstabilen Formen genügt es oft, die Form nach ihrer Befüllung flüssigkeitsdicht abzuschließen. Im Falle der Verwendung von solchen Formwerkzeugen, die durch den auf die Kohlendioxidentwicklung zurückzuführenden inneren Druck mit einer Vergrößerung des Innenvolumens reagieren, ist durch Anlegen eines äußeren Drucks die Volumenvergrößerung zu verhindern. Härtere Formulierungen neigen unter Umständen zu einer Verfestigung über einen wachsartig-spröden Zwischenzustand in Verbindung mit einer sehr frühzeitig auftretenden Schwindung. In dieser Phase kann der $CO_2$-Innendruck das Formteil in den wegen der Schwindung frei werdenden Raum ausdehnen, was in der spröden Zwischenphase bereits vor Öffnung des Werkzeuges zu einer Beschädigung des Formteils durch Rißbildung (Muschelrisse) führen kann.

Dem kann durch eine der Schwindung entsprechenden Nachführung des Werkzeugvolumens - entsprechend dem in EP-A-0 024 610 beschriebenen Prinzip der Verkleinerung des Werkzeugvolumens während der Verfestigungsphase - entgegengewirkt werden. Diese "Nachdrucktechnik" ist mit sogenannten Tauchkanten-Werkzeugen (siehe beispielsweise "Kunststoff-Handbuch, Carl Hanser Verlag, München 1973, Bd. VIII, "Polyester Seite 488") sehr einfach möglich. Vorrichtungen, die die Nachdrucktechnik mit Werkzeugen ohne Tauchkante erlauben, sind in EP-A-0 024 610 beschrieben.

Gegebenenfalls ist es auch möglich, die thermische Ausdehnung der Reaktionsmischung zur Kompensation der im Reaktionsverlauf auftretenden Schwindung auszunutzen, indem das möglichst heiße Werkzeug mit einem relativ niedrig temperierten Reaktionsgemisch vollgefüllt und dicht verschlossen wird. Dies heißt, daß hierbei das Werkzeug vor Befüllung bei einer Temperatur gehalten wird, die höher liegt als die Temperatur des Reaktionsgemisches.

Die beim erfindungsgemäßen Verfahren im Werkzeug auftretenden Innendrücke liegen, je nach verwendeter Wassermenge bei ca. 10 bis 180 bar, vorzugsweise bei 40 bis 150 bar. Bei diesen Drücken bleibt das gebildete $CO_2$ in Lösung, eine vollständige Ausfüllung des Werkzeuges vorausgesetzt. Damit dies tatsächlich möglich ist, müssen die Rohstoffe vor dem Eintragen in das Werkzeug gut entgast und luftfrei sein, denn Luft bzw. Stickstoff sind bei den vorgegebenen Verarbeitungsbedingungen nicht im Polymer löslich. Bei ungenügender Entgasung können sich deshalb Blasen bilden, die ihrerseits wiederum aufgrund ihres hohen Innendrucks zu einer meist nach der Entformung auftretenden Rißbildung im Formteil führen können.

Die frischen Formteile können im allgemeinen nicht wie bei Glykol- oder Aminvernetzung üblich, sofort bei hoher Temperatur - z.B. 110° C - getempert werden. Eine solche Temperaturbelastung würde in dem frischen Formkörper zu einer starken Zunahme des Innendrucks führen, der auf den sehr raschen Übergang des gelösten $CO_2$ in den gasförmigen Zustand mit entsprechendem Druckaufbau zurückzuführen ist.

Lagert man die Formkörper bei Raumtemperatur, geben sie allmählich das in ihnen gelöste $CO_2$ durch Diffusion ab. Nach 12 Stunden Lagerung bei Raumtemperatur ist der größte Teil des $CO_2$ verschwunden. Dann können die Teile ohne Gefahr bei erhöhter Temperatur - z.B. 110° C - getempert werden. Will man zu einem früheren Zeitpunkt tempern, so muß die Temperatur stufenweise - ausgehend von 50 bis 60° C - angehoben werden.

Das erfindungsgemäße Verfahren gestattet die Herstellung von hochwertigen Polyurethan-Polyharnstoff-Elastomerformkörpern in einem Härtebereich von 60 Shore A bis ca. 60 Shore D.

In den nachfolgenden Beispielen beziehen sich alle Prozentangaben auf Gewichtsprozente.

In den nachfolgenden Beispielen werden folgende Rohstoffe eingesetzt:

Polyisocyanat 1:

NCO-Prepolymer mit einem NCO-Gehalt von 3,9 %, hergestellt durch Umsetzung von 2,14 Mol 1,5-Diisocyanatonaphthalin mit 1 Mol eines Polyesterdiols des Molekulargewichts 2.000 aus Adipinäure und Ethandiol-(1,2).

Polyisocyanat 2:

NCO-Prepolymer mit einem Isocyanatgehalt von 19,5 %, hergestellt durch Umsetzung von 1 Mol eines Polyesterdiols des Molekulargewichts 2.000 aus Adipinsäure und einem Gemisch aus Ethandiol-(1,2) und Butandiol-(1,4) im Gewichtsverhältnis 70:30 mit 13 Mol von 4,4′-Diisocyanatodiphenylmethan.

Die übrigen Komponenten werden in einer einzigen, als "Polyolmischung" bezeichneten Komponenten zusammengefaßt:

Polyolmischungen

| Polyolmischung Nr. | 1 | 2 | 3 | 4 | 5 | 6 | 7 | |
|---|---|---|---|---|---|---|---|---|
| Polyesterdiol, MG 2.000 | 100[1] | 100[2] | 100[2] | 100[2] | 100[2] | 100[2] | 100[2] | Gew.-Tle. |
| Wasser | 3,0 | 1,0 | 2,0 | 3,0 | 4,0 | 5,0 | 8,0 | " " |
| Silikonöl M 100[3] | - | 0,5 | 0,5 | 0,5 | 0,5 | 0,5 | 0,5 | " " |
| Natriumsalz der Monochloressigsäure | 0,035 | - | - | - | - | - | - | " " |
| DABCO 33 LV | 0,02 | 0,1 | 0,1 | 0,1 | 0,1 | 0,1 | 0,1 | " " |
| Diethanolamin | - | - | - | - | 3 | - | - | " " |
| Triethanolamin | - | - | - | - | - | 3 | 5 | " " |

(1) hergestellt aus Adipinsäure und Ethandiol-(1,2)

(2) hergestellt aus Adipinsäure und einem Gemisch von Ethandiol und Butandiol-(1,4) im Gew.-Verhältnis 70:30

(3) Methylpolysiloxan, Bayer AG

Verarbeitungsbedingungen

Die Formulierungen mit niedrigen Wasseranteilen können im Prinzip durch Handvermischung verarbeitet werden. Da bei manueller Verarbeitung jedoch die Gefahr besteht, daß Luftblasen eingerührt werden,

wurde mit Ausnahme von Beispiel 1 immer ein Niederdruck-Dosieraggregat mit Rührwerkvermischung verwendet. Nach der Herstellung des Reaktionsgemischs wurde die Form jeweils zu 100 % gefüllt. Vor Befüllen des Formwerkzeugs wurden dessen Innenwände mit einem handelsüblichen Formtrennmittel (PURA 1 der Fa. H.W. Hapke GmbH, D-2000 Norderstedt, Postfach 5108) beschichtet.

| Beispiel | 1 | 2-7 | |
|---|---|---|---|
| Rohstofftemperatur | | | |
| Polyolmischung | 50 | 50-60 | °C |
| Polyisocyanat | 130 | 50-60 | °C |
| Werkzeugtemperatur | 100 | 80 | °C |
| Formteil: Plattenform | | | |
| Wandstärke | 30 | 6 | mm |
| Außenmaße | 18x18 | 18x18 | cm |
| Entformungszeit | 30 | 45 | min |
| Temperung | 24 h / 110°C | | |

Die beim Gießen völlig geöffnete Form wurde nach dem Befüllen mit dem Reaktionsgemisch durch Auflegen einer Elastomerplatte und anschließendes Zuhalten in einer Presse mit 100 bar Zuhaltedruck absolut dicht verschlossen. Die Temperung erfolgte nach Lagerung der entformten Formkörper bei 110 °C während eines Zeitraums von 24 h.

**Beispiele**

| Beispiel Nr. | 1 | 2 | 3 | 4 | 5 | 6 | 7 | DIM | DIN |
|---|---|---|---|---|---|---|---|---|---|
| Polyolmischung | 1 | 2 | 3 | 4 | 5 | 6 | 7 | - | - |
| Menge Polyolmischung | 100 | 101,6 | 102,6 | 103,6 | 107,6 | 108,6 | 113,6 | Gew.-Tle. | - |
| Polyisocyanat 1 | 490 | - | - | - | - | - | - | Gew.-Tle. | - |
| Polyisocyanat 2 | - | 46 | 69 | 92 | 123,4 | 145,5 | 212 | Gew.-Tle. | - |
| NCO-Kennzahl | 108 | 102 | 100 | 99 | 91 | 95 | 91 | | - |
| Oberflächenhärte | 78 | - | 90 | 93 | 97 | 98 | - | Shore A | 53 505 |
| Dichte | 1,2 | 1,2 | 1,2 | 1,2 | 1,2 | 1,2 | 1,2 | kg/m³ g/cm³ | 53 479 |
| Zugfestigkeit | 44 | 27 | 31 | 17 | 20 | 21 | - | MPa | 53 504 |
| Bruchdehnung | 786 | 751 | 712 | 711 | 450 | 484 | - | % | 53 504 |
| Weiterreißfestigkeit | 57,3 | - | - | - | - | - | - | kN/m | 53 515 |
| Stoßelastizität | 58 | - | - | - | - | - | - | % | 53 512 |
| Druckverformungsrest (24 h/70°C) | 18,5 | 37,8 | 32,2 | 42,4 | 46,7 | 38,3 | 49,5 | % | 53 517 |
| Abrieb | 34 | 30 | 30 | 30 | 38 | 49 | 64 | mm³ | 53 516 |
| Torsionsschwingvers.: | | | | | | | | | |
| G'( 20°C) | 6,5 | 10,0 | 21,4 | 27,6 | - | 54,7 | 93,0 | MPa | 53 545 |
| G'(120°C) | 9,0 | 9,3 | 19,8 | 23,7 | - | 36,8 | 48,7 | MPa | 53 545 |
| tan δ (100°C) | 0,01 | 0,030 | 0,035 | - | 0,046 | 0,062 | - | - | 53 545 |

## Patentansprüche

1. Verfahren zur Herstellung von elastomeren Formkörpern auf Basis von Harnstoffgruppen aufweisenden Polyisocyanat-Polyadditionsprodukten durch Umsetzung von
   a) einer Polyisocyanatkomponente mit

b) Verbindungen mit mindestens zwei gegenüber Isocyanatgruppen reaktionsfähigen Gruppen des Molekulargewichtsbereichs 500 bis 12.000,
c) Wasser als Kettenverlängerungsmittel,
und gegebenenfalls
d) organischen Verbindungen mit gegenüber Isocyanatgruppen reaktionsfähigen Wasserstoffatomen des Molekulargewichtsbereichs 60 bis 499,
gegebenenfalls unter Mitverwendung von
e) den aus der Polyurethanchemie an sich bekannten Hilfs- und Zusatzmitteln

nach dem Einstufen- oder Prepolymer-Verfahren unter Einhaltung einer Isocyanatkennzahl von 70 bis 125,
dadurch gekennzeichnet, daß

(i) das Wasser in einer Menge von mindestens 10 Mol-%, bezogen auf die molare Menge an Isocyanatgruppen der Komponente a), verwendet wird und
(ii) daß die aus den Komponenten hergestellte Reaktionsmischung im Gießverfahren in ein offenes Werkzeug gefüllt wird, wobei die eingetragene Menge mindestens 95 % des Formteilvolumens ausmacht, und anschließend das Werkzeug dicht verschlossen wird, so daß durch Reaktion zwischen Wasser und Isocyanat gebildets Kohlendioxid praktisch nicht zur Expansion des Reaktionsgemisches führen kann.

**2.** Verfahren gemäß Anspruch 1, dadurch gekennzeichnet, daß das Werkzeug vor seiner Befüllung bei einer Temperatur gehalten wird, die höher liegt als die Temperatur des Reaktionsgemischs.

**3.** Verfahren gemäß Anspruch 1, dadurch gekennzeichnet, daß man zur Kompensation der im Werkzeug im Verlauf der Verfestigung auftretenden Schwindung den Werkzeughohlraum kontinuierlich verkleinert, so daß der Reaktionsdruck im Werkzeug bis zur Entformbarkeit des Formkörpers aufrechterhalten wird.

## Claims

**1.** A process for the production of elastomeric mouldings based on polyisocyanate polyadducts containing urea groups by reaction of

a) a polyisocyanate component with
b) compounds containing at least two isocyanate-reactive groups and having a molecular weight of 500 to 12,000,
c) water as chain-extending agent
and, optionally,
d) organic compounds containing isocyanate-reactive hydrogen atoms and having a molecular weight of 60 to 499,
optionally using
e) the auxiliaries and additives known per se from polyurethane chemistry,

by the one-shot or prepolymer method, the isocyanate index being kept in the range from 70 to 125,
characterized in that

(i) the water is used in a quantity of least 10 mol-%, based on the molar quantity of isocyanate groups of component a), and
(ii) the reaction mixture prepared from the components is introduced into an open mould by the casting method, the quantity introduced making up at least 95% of the volume of the moulding, and the mould is then tightly closed so that carbon dioxide formed by reaction of water and isocyanate cannot lead to expansion of the reaction mixture.

**2.** A process as claimed in claim 1, characterized in that, before it is filled, the mould is kept at a temperature higher than the temperature of the reaction mixture.

**3.** A process as claimed in claim 1, characterized in that, to compensate the shrinkage occurring during solidification, the mould cavity is continuously reduced so that the reaction pressure in the mould is maintained until the moulding can be removed.

## Revendications

**1.** Procédé pour la fabrication de corps moulés élastomères à base de produits de polyaddition, portant

des groupes urée, de polyisocyanates, par réaction de :

a) un composant polyisocyanate avec

b) des composés portant au moins deux groupes réactifs avec les groupes isocyanate, de poids moléculaire 500 à 12 000,

c) l'eau en tant qu'agent d'allongement des chaînes,

et le cas échéant

d) des composés organiques portant des atomes d'hydrogène réactifs avec les groupes isocyanate, de poids moléculaire 60 à 499,

le cas échéant avec utilisation conjointe de :

e) les produits auxiliaires et additifs connus en soi dans la chimie des polyuréthannes,

par le procédé à un seul stade opératoire ou par le procédé au prépolymère, avec maintien d'un indice d'isocyanate de 70 à 125,

caractérise en ce que :

(i) on utilise l'eau en quantité d'au moins 10 moi % par rapport à la quantité molaire des groupes isocyanate du composant a), et

(ii) on introduit le mélange de réaction préparé à partir des composants dans un outil ouvert par coulée, la quantité introduite représentant au moins 95 % du volume de la pièce moulée, puis on forme hermétiquement l'outil en sorte que le dioxyde de carbone formé par réaction entre l'eau et l'isocyanate ne puisse pratiquement conduire à une expansion du mélange de réaction.

**2.** Procédé selon la revendication 1, caractérisé en ce que, avant son remplissage, l'outil est maintenu à une température supérieure à celle du mélange de réaction.

**3.** Procédé selon la revendication 1, caractérisé en ce que, pour compenser le retrait se produisant dans l'outil au cours de la solidification, on réduit en continu l'espace vide de t'outil de manière à maintenir la pression de réaction dans l'outil jusqu'à ce que le corps moulé puisse être démoulé.